Europäisches Patentamt

European Patent Office    (11) Veröffentlichungsnummer: **0 383 098**

Office européen des brevets    **A1**

(12) **EUROPÄISCHE PATENTANMELDUNG**

(21) Anmeldenummer: 90101945.5    (51) Int. Cl.⁵: **C08K 7/00, C08K 5/10,**
                                            **C08L 61/10, B32B 21/14**

(22) Anmeldetag: 01.02.90

| | |
|---|---|
| Patentansprüche für folgenden Vertragsstaat: ES. | (71) Anmelder: **BASF Aktiengesellschaft**<br>**Carl-Bosch-Strasse 38**<br>**D-6700 Ludwigshafen(DE)** |
| (30) Priorität: **10.02.89 DE 3903953** | |
| | (72) Erfinder: **Dormeyer, Dieter**<br>**Raiffeisenstrasse 13**<br>**D-6701 Fussgoenheim(DE)**<br>Erfinder: **Kochersperger, Winfried**<br>**Bergstrasse 10**<br>**D-6509 Monzernheim(DE)**<br>Erfinder: **Wolf, Franz, Dr.**<br>**Gartenstrasse 14**<br>**D-6732 Edenkoben(DE)**<br>Erfinder: **Pfütze, Eberhard, Dr.**<br>**Sunsweilerstrasse 18**<br>**D-6506 Nackenheim(DE)** |
| (43) Veröffentlichungstag der Anmeldung:<br>**22.08.90 Patentblatt 90/34** | |
| (84) Benannte Vertragsstaaten:<br>**AT BE CH DE DK ES FR GB IT LI NL SE** | |

(54) **Härtemischung zur Härtung von alkalischen Phenol-Formaldehyd-Harzen.**

(57) Die vorliegende Erfindung betrifft eine Härtermischung zur Härtung von alkalischen Phenol-Formaldehyd-Harzen, enthaltend
    A) einen pulverförmigen oder faserförmigen Füllstoff und
    B) einen Kohlensäureester.

EP 0 383 098 A1

## Härtermischung zur Härtung von alkalischen Phenol-Formaldehyd-Harzen

Gegenstand der vorliegenden Erfindung ist eine Härtermischung zur Härtung von alkalischen Phenol-Formaldehyd-Harzen, ein Verfahren zur Herstellung von Holzwerkstoffen unter Verwendung dieser Härtermischung sowie diese Holzwerkstoffe.

Bei der Herstellung von Holzwerkstoffen durch Verleimung von Furnieren mit alkalischen Phenol-Formaldehyd-Harzen müssen die Furniere auf einen Wassergehalt von 0 bis 7 Gew.% getrocknet werden, da die Phenolharze in Gegenwart hoher Wassermengen nur sehr langsam aushärten. Diese Trocknung ist zeit- und energieaufwendig.

Für die Verleimung von Holzfurnieren mit Wassergehalten über 7 Gew.% wurden mehrere Lösungen vorgeschlagen, die aber noch nicht voll befriedigend sind. In R. J. Clark et al., Forest Products Journal 38, 7·8, 1988, Seiten 71 bis 75 wurden neue Harze zur Verklebung von Furnieren mit hohen Feuchtegehalten beschrieben. Hier handelt es sich um ein mit natürlichen Kohlenhydraten modifiziertes System. Es werden Naturstoffe verwendet, die je nach Herkunft unterschiedliche Qualität aufweisen. Einige Einsatzstoffe, vor allem Glucose, sind relativ teuer. Ferner sind viele Verfahrenschritte nötig.

Um Holzwerkstoffe herzustellen, die gegenüber heißem Wasser eine hohe Beständigkeit zeigen, wird in der FR-PS-15 50 847 der Zusatz von Carbonaten beschrieben.

In der DE-AS-23 63 782 wird auf die Schwierigkeiten bei der Verwendung von Alkylencarbonaten hingewiesen. Beim Einbringen in die Phenolharz-Bindemittelflotte kommt es zur teilweisen Aushärtung und Bildung von festen Partikeln. Bei der Verwendung von flüssigen Alkylencarbonaten kommt es zur Bildung von gallertartigen Teilchen. Deshalb wird vorgeschlagen, daß Alkylencarbonat in 30 bis 42 gew.%igem wäßrigen Formaldehyd zu verwenden, was für die Lösung der vorliegenden Erfindung unbrauchbar ist.

Aufgabe der vorliegenden Erfindung war es, einen Härter für alkalische Phenol-Formaldehyd-Harze zu entwickeln, die zur Verleimung von Holzfurnieren mit einem Wassergehalt von mehr 7 Gew.% geeignet sind.

Gegenstand der vorliegenden Erfindung ist eine Härtermischung zur Härtung von alkalischen Phenol-Formaldehyd-Harzen, enthaltend

A) einen pulverförmigen oder faserförmigen Füllstoff und

B) einen Kohlensäureester.

Ferner bezieht sich die vorliegende Erfindung auf ein Verfahren zur Herstellung von Holzwerkstoffen durch Verleimung von Furnieren mittels Phenol-Formaldeyhd-Harzen, die mit der erfindungsgemäßen Härtermischung gehärtet werden, sowie auf diese Holzwerkstoffe selbst.

Zu den Komponenten der Härtermischung ist folgendes auszuführen:

Als Komponente A) können pulverförmige oder faserförmige Füllstoffe verwendet werden. Sie können organischer oder anorganischer Natur sein. Beispiele für organische Füllstoffe sind Mehle, wie die Getreidemehle Roggenmehl, Weizenmehl, Weigennachmehl und Maismehl. Aber auch Stärke, Kokosnußschalenmehl, Olivenkernmehl, Aprikosenmandelschalenmehl oder Mehle von Hülsenfrüchten sind geeignet. Beispiele für anorganische Füllstoffe sind Kreide, Kaolinit, Bentonit und Wollastonit. Bevorzugt wird Kokosnußschalenmehl verwendet.

Die Komponente A) wird vorteilhaft in einer Menge von 80 bis 99 Gew.%, bevorzugt 90 bis 98 Gew.%, besonders bevorzugt 95 bis 97 Gew.% bezogen auf die Härtermischung aus A) und B), verwendet.

Als Komponente B) werden Kohlensäureester verwendet. Geeignet sind acyclische und cyclische organische Kohlensäureester. Beispiele für acyclische Kohlensäureester sind Dimethylcarbonat, Methylethylcarbonat, Diethylcarbonat und Dibutylcarbonat. Geeignete cyclische Kohlensäureester sind beispielsweise Ethylencarbonat, Propylencarbonat, Vinylidencarbonat und halogenierte cyclische Kohlensäureester. Bevorzugt werden Ethylencarbonat und Propylencarbonat verwendet.

Die Komponente B) wird vorteilhaft in einer Menge von 1 bis 20 Gew.%, bevorzugt 2 bis 10 Gew.%, besonders bevorzugt 3 bis 5 Gew.%, bezogen auf die Härtermischung aus A) und B), verwendet.

Als Komponente C) können Paraformaldehyd und andere Hilfsstoffe wie Resorcin oder Antibackmittel mitverwendet werden. Sie können beispielsweise als Beschleuniger wirken oder der Auflockerung der Härtermischung dienen. Wird die Komponente C) mitverwendet, so haben sich folgende Härtermischungen bewährt:

50 bis 98 Gew.%, bevorzugt 65 bis 95 Gew.%, besonders bevorzugt 80 bis 93 Gew.%, Komponente A),

1 bis 20 Gew.%, bevorzugt 5 bis 15 Gew.%, Komponente B) und

1 bis 30 Gew.%, bevorzugt 10 bis 20 Gew.%, Komponente C),

wobei sich die Gewichtsprozente für die Komponente A), B) und C) auf 100 Gew.% ergänzen.

Die Herstellung des Kohlensäureester-Füllstoff-Gemisches erfolgt durch einfache stufenweise Zugabe des flüssigen Kohlensäureesters zu dem Füllstoff oder Füllstoffgemisch. Dies kann in einem Mischgefäß erfolgen, aber auch vorteilhaft in einer Mühle während des Mahlens von z.B. Kokosnußschalenmehl. Wichtig für die Herstellung der Leimflotte und die Verleimungsqualität ist eine gleichmäßige Vermischung. Es dürfen keine lokalen Feuchtebereiche auftreten. Die Härtermischung muß eine gute Pulverkonsistenz haben und darf an keiner Stelle zusammenbacken. Zur Erreichung dieses Ziels kann man in schwierigen Fällen auch Antibackmittel wie hydrophobes Siliciumdioxid zufügen.

Die alkalischen Phenol-Formaldehyd-Harze, die sogenannten Resole, die mittels der erfindungsgemäßen Härtermischung gehärtet werden, sind bekannt. Solche Resole sind wäßrige Lösungen aus Phenol-Formaldehyd-Kondensationsprodukten mit einem Molverhältnis Formaldehyd : Phenol von 1,5 bis 2,7, bevorzugt 1,8 bis 2,4, die noch Alkali in Form von Natriumhydroxid oder Kaliumhydroxid enthalten. Sie können auch zusätzlich noch Resorcin enthalten. Die Viskosität solcher Harze liegt zwischen 500 und 1500 mPas, bevorzugt 800 bis 1200 mPas, gemessen jeweils bei 20°C, können aber auch tiefer liegen. Dies gilt vor allem, wenn zusätzlich noch Harnstoff in der Harzlösung aufgelöst wurde, was beispielsweise in DE-C-33 46 153, DE-A-37 08 739 und DE-A-37 08 740 beschrieben ist.

Die Trockengehalte der Phenol-Formaldehyd-Harzlösungen liegen im allgemeinen zwischen 40 und 65 Gew.%, bevorzugt 45 bis 60 Gew.%, besonders bevorzugt zwischen 48 und 55 Gew.%. Die Trockengehalte werden durch zweistündiges Trocknen im Trockenschrank bei 120°C bestimmt. Der Alkaligehalt beträgt vorteilhaft 2 bis 15 Gew.%, bevorzugt 5 bis 12 Gew.%. Das Molverhältnis Formaldehyd : Phenol liegt vorteilhaft zwischen 1,5 bis 2,7, bevorzugt 1,8 bis 2,4. Der Resorcingehalt kann 0 bis 5 Gew.%, bevorzugt 2 bis 3 Gew.%, betragen.

In diese Phenol-Formaldehyd-Harzlösung wird das Härtergemisch unter Rühren zugegeben. Es werden vorteilhaft soviel Gewichtsprozent Härtergemisch zugegeben, daß der Gehalt an Kohlensäureester in der Leimflotte 0,1 - 10 Gew.%, bevorzugt 0,2 - 5% Gew.%, beträgt.

Diese Harz-Härter-Lösung wird als Leimflotte bezeichnet und zeichnet sich dadurch aus, daß diese gegenüber Zusatz von flüssigem Kohlensäureester gleichmäßig und klumpenfrei ist. Mit dieser Leimflotte werden vorteilhaft nicht vorgetrocknete Furniere mit einem Wassergehalt (Furnierfeuchte) von 12 Gew.% und mehr beleimt, in der gewünschten Anzahl übereinandergelegt und bei 100 bis 150°C, bevorzugt 110 bis 140°C, in einer Presse ausgehärtet. Die Furnierplatten zeigen eine gleichmäßige Verleimung mit ausgezeichneten mechanischen Eigenschaften. Sie sind nach DIN 68 705, Teil 2, wetterfest.

Beispiel 1

Härtermischung 1:

11 kg Kokosnußschalenmehl wurden mit 1 kg Paraformaldehyd gemischt. Auf diese Mischung wurde 0,5 kg Propylencarbonat aufgedüst und weiter homogenisiert bis ein nicht blockendes Pulver entstanden war.

Leimflotte 1:

12,5 kg Härtermischung 1 wurden in 100 kg eines 48gew.%igen wäßrigen alkalisch kondensierten Phenol-Formaldehyd-Harzes mit einem Molverhältnis Formaldehyd : Phenol von 2,04 und einem Natriumhydroxidgehalt von 9,2 Gew.% und einer Viskosität von 1150 mPas (20°C) eingerührt.

Beispiel 2

Härtermischung 2:

Zu 12,5 kg der Härtermischung 1 wurden 2 kg Resorcin gegeben.

Leimflotte 2:

3

14,5 kg Härtermischung 2 wurden in 100 kg der Phenol-Formaldehyd-Harzlösung aus Beispiel 1 gegeben.

Beispiel 3 (Vergleichsbeispiel)

Härtermischung 3:

78 kg Kokosnußschalenmehl wurden mit 22 kg Paraformaldehyd zu einem homogenen Pulver gemischt.

Leimflotte 3:

4 kg Härtermischung 3 und 8 kg Kokosnußschalenmehl wurden zu 100 kg der Phenol-Formaldehyd-Harzlösung aus Beispiel 1 gegeben.

Beispiel 4 (Vergleichsbeispiel)

Leimflotte 4:

Zu der Leimflotte 3 wurden nachträglich 0,5 kg Propylencarbonat gegeben und homogenisiert.

Mit diesen Leimflotten wurden Furniere mit unterschiedlichen Feuchtigkeiten beschichtet und mit den in der Tabelle angegebenen Daten verarbeitet. Dabei ist die Mindespreßzeit die Zeit, nach der beim Druckentlasten das Furnier gerade nicht mehr durch den Wasserdampfdruck aufplatzt.

Die Festigkeit nach DIN 68 705 (AW 100) ist die Kraft, die erforderlich ist, zwei Furnierschichten gegen die Festigkeit der Klebung horizontal gegeneinander zu verschieben.

Tabelle

| Beispiel Nr. | 1 | | 2 | | 3 Vergl.bsp. | | 4 Vergl.bsp. | |
|---|---|---|---|---|---|---|---|---|
| Flottenbeschaffenheit | gleichmäßig | | gleichmäßig | | gleichmäßig | | inhomogen | |
| Leimauftrag | gleichmäßig | | gleichmäßig | | gleichmäßig | | ungleichmäßig | |
| Beleimung (g/cm²) | 180 | | 180 | | 180 | | 180 | |
| Holzart | Buche | | Gabun | | Buche | | Gabun | |
| Furnierdicke (mm) | 1,5 | | 1,5 | | 1,5 | | 1,5 | |
| Zahl der Furnierschichten | 7 | | 7 | | 7 | | 7 | |
| Preßtemperatur (°C) | 140 | | 115 | | 140 | | 115 | |
| Preßdruck (N/mm²) | 1,5 | | 0,8 | | 1,5 | | 0,8 | |
| Preßzeit (min) | 3 - 8 | | 8 - 10 | | 3 - 8 | | 8 - 10 | |
| Furnierfeuchte (Gew.% Wasser) | 7 | 13 | 13 | 7 | 7 | 13 | 7 | 13 |
| Mindestpreßzeiten (min.) | 3 | 9 | 8 | 8 | 4 | 8 | 10 | 10 |
| Festigkeit AW 100 (N/mm²) | 1,59 | 1,9 | 1,01 | 2,2 | 0,81 | 0,49 | * | * |

* keine Aussage, da sehr stark schwankende Werte

Wie aus der Tabelle hervorgeht, sind die Festigkeiten bei feuchten Furnieren (13 Gew.% Wasser) allgemein niedriger als bei trockenen (7 Gew.% Wasser) Furnieren.

Die Festigkeiten der erfindungsgemäßen Beispiele sind mehr als doppelt so hoch wie die des Standes der Technik, wobei die Zugabe des flüssigen Propylencarbonats in Beispiel 4 zu ungleicher Verleimung und damit stark schwankenden Festigkeiten führte.


**Ansprüche**

1. Härtermischung zur Härtung von alkalischen Phenol-Formaldehyd-Harzen, enthaltend als wesentliche Komponenten
A) einen pulverförmigen oder faserförmigen Füllstoff und
B) einen Kohlensäureester.
2. Härtermischung nach Anspruch 1, bestehend aus
A) 80 bis 99 Gew.% eines pulverförmigen oder faserförmigen Füllstoffes und
B) 1 bis 20 Gew.% eines Kohlensäureesters.
3. Härtermischung nach Anspruch 1 oder 2, enthaltend
A) 50 bis 98 Gew.% eines pulverförmigen oder faserförmigen Füllstoffes,
B) 1 bis 20 Gew.% eines Kohlensäureesters und
C) 1 bis 30 Gew.% Hilfsstoffe.
4. Härtermischung nach einem der Ansprüche 1 bis 3, enthaltend Mehle aus Getreide, Stärke, Kokosnußschalen, Olivenkernen, Aprikosenmandeln und/oder Hülsenfrüchten als Komponente A).
5. Härtermischung nach einem der Ansprüche 1 bis 4, enthaltend Kreide, Kaolinit, Bentonit und/oder Wollastonit als Komponente A).
6. Härtermischung nach einem der Ansprüche 1 bis 5, enthaltend cycloaliphatische Kohlensäureester als Komponente B).
7. Härtermischung nach einem der Ansprüche 1 bis 6, enthaltend Propylencarbonat als Komponente B).
8. Härtermischung nach einem der Ansprüche 3 bis 7, enthaltend Paraformaldehyd als Komponente C).
9. Härtermischung nach einem der Ansprüche 3 bis 7, enthaltend Paraformaldehyd und Resorcin als Komponenten C).
10. Verfahren zur Herstellung von Holzwerkstoffen durch Verleimung von Holzfurnieren mit alkalischen Phenol-Formaldehyd-Harzen, dadurch gekennzeichnet, daß man den Harzen eine Härtermischung gemäß einem der Ansprüche 1 bis 7 zusetzt.
11. Verfahren zur Herstellung von Holzwerkstoffen durch Verleimung von Holzfurnieren mit einem Wassergehalt von 10 bis 25 Gew.% mit alkalischen Phenol-Formaldehyd-Harzen, dadurch gekennzeichnet, daß man den Harzen eine Härtermischung gemäß einem der Ansprüche 1 bis 7 zusetzt.
12. Holzwerkstoffe, erhältlich nach einem Verfahren gemäß einem der Ansprüche 8 oder 9.


Patentansprüche für folgenden Vertragsstaat: ES

1. Verfahren zur Herstellung einer Härtermischung zur Härtung von alkalischen Phenol-Formaldehyd-Harzen, dadurch gekennzeichnet, daß man
A) einen pulverförmigen oder faserförmigen Füllstoff mit
B) einem Kohlensäureester
mischt.
2. Verfahren zur Herstellung einer Härtermischung nach Anspruch 1, dadurch gekennzeichnet, daß man
A) 80 bis 99 Gew.% eines pulverförmigen oder faserförmigen Füllstoffes mit
B) 1 bis 20 Gew.% eines Kohlensäureesters
mischt.
3. Verfahren zur Herstellung einer Härtermischung nach Anspruch 1 oder 2, dadurch gekennzeichnet, daß man
A) 50 bis 98 Gew.% eines pulverförmigen oder faserförmigen Füllstoffes mit
B) 1 bis 20 Gew.% eines Kohlensäureesters und
c) 1 bis 30 Gew.% Hilfsstoffen
mischt.
4. Verfahren zur Herstellung einer Härtermischung nach einem der Ansprüche 1 bis 3, dadurch gekennzeichnet, daß man Mehle aus Getreide, Stärke, Kokosnußschalen, Olivenkernen, Aprikosenmandeln und/oder Hülsenfrüchten als Komponente A) verwendet.
5. Verfahren zur Herstellung einer Härtermischung nach einem der Ansprüche 1 bis 4, dadurch gekennzeichnet, daß man Kreide, Kaolinit, Bentonit und/oder Wollastonit als Komponente A) verwendet.
6. Verfahren zur Herstellung einer Härtermischung nach einem der Ansprüche 1 bis 5, dadurch gekennzeichnet, daß man cycloaliphatische Kohlensäureester als Komponente B) verwendet.

7. Verfahren zur Herstellung einer Härtermischung nach einem der Ansprüche 1 bis 6, dadurch gekennzeichnet, daß man Propylencarbonat als Komponente B) verwendet.

8. Verfahren zur Herstellung einer Härtermischung nach einem der Ansprüche 3 bis 7, dadurch gekennzeichnet, daß man Paraformaldehyd als Komponente C) verwendet.

9. Verfahren zur Herstellung einer Härtermischung nach einem der Ansprüche 3 bis 7, dadurch gekennzeichnet, daß man Paraformaldehyd und Resorcin als Komponenten C) verwendet.

10. Verfahren zur Herstellung von Holzwerkstoffen durch Verleimung von Holzfurnieren mit alkalischen Phenol-Formaldehyd-Harzen, dadurch gekennzeichnet, daß man den Harzen eine Härtermischung gemäß einem der Ansprüche 1 bis 7 zusetzt.

11. Verfahren zur Herstellung von Holzwerkstoffen durch Verleimung von Holzfurnieren mit einem Wassergehalt von 10 bis 25 Gew.% mit alkalischen Phenol-Formaldehyd-Harzen, dadurch gekennzeichnet, daß man den Harzen eine Härtermischung gemäß einem der Ansprüche 1 bis 7 zusetzt.

Europäisches
Patentamt

**EUROPÄISCHER RECHERCHENBERICHT**

| | **EINSCHLÄGIGE DOKUMENTE** | | EP 90101945.5 |

| Kategorie | Kennzeichnung des Dokuments mit Angabe, soweit erforderlich der maßgeblichen Teile | Betrifft Anspruch | KLASSIFIKATION DER ANMELDUNG (Int. Cl.5) |
|---|---|---|---|
| A | <u>EP - A2 - 259 042</u><br>(BORDEN INC)<br>    * Seiten 5-7, Zeile 33;<br>    Ansprüche *<br>    -- | 1-12 | C 08 K   7/00<br>C 08 K   5/10<br>C 08 L 61/10<br>B 32 B 21/14 |
| A<br><br><br>D | <u>DE - A - 1 653 266</u><br>(DEUTSCHE TEXACO AG)<br>    * Seite 3, 2. Absatz von<br>    unten; Beispiel; Ansprüche *<br>    & FR - A - 1 550 847<br>    -- | 1-12 | |
| A | <u>US - A - 4 311 621</u><br>(NISHIZAWA et al.)<br>    * Spalte 1, Zeilen 9-25;<br>    Ansprüche *<br>    -- | 1-4,<br>10-12 | |
| A | <u>WO - A1 - 84/00 970</u><br>(STAURAKELIS)<br>    * Seite 5 - Seite 6, Zeile 3;<br>    Seite 7 *<br>    ---- | 1-4,<br>9-12 | RECHERCHIERTE SACHGEBIETE (Int. Cl.5)<br><br>C 08 L 61/00<br>C 08 L 97/00<br>C 08 K<br>B 32 B 21/00 |

Der vorliegende Recherchenbericht wurde für alle Patentansprüche erstellt

| Recherchenort | Abschlußdatum der Recherche | Prüfer |
|---|---|---|
| WIEN | 17-05-1990 | TENGLER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsatze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 62